# EUROPEAN PATENT SPECIFICATION

(11) **EP 2 977 318 B1**
(45) Date of publication and mention of the grant of the patent: **02.05.2018**
(21) Application number: 15178010.3
(22) Date of filing: 23.07.2015
(51) Int. Cl.: B64C 39/02, B64D 1/12, F42D 3/00

(54) **REMOTELY PILOTED AIRCRAFT OR DRONE ADAPTED TO INDUCE ARTIFICIAL AVALANCHE DETACHMENT**
FERNGESTEUERTES LUFTFAHRZEUG ODER FERNGESTEUERTE DROHNE ZUM KÜNSTLICHEN AUSLÖSEN EINES LAWINENABGANGS
AÉRONEF PILOTÉ À DISTANCE OU DRONE CONÇU POUR INDUIRE UN DÉTACHEMENT PAR AVALANCHE ARTIFICIELLE

(30) Priority: 23.07.2014 IT AO20140003 U
(43) Date of publication of application: 27.01.2016
(73) Proprietor: ATM S.r.l., 24060 Sovere (BG) (IT)
(72) Inventor: PETACCHI, Gianfranco, 11027 Saint Vincent (AO) (IT)
(74) Representative: Baroni, Matteo

(56) References cited:
- EP-A2- 2 287 559
- DE-C1- 4 302 252
- FR-A1- 2 964 732
- US-A1- 2014 353 422
- Edward D Mccormack: "The Use of Small Unmanned Aircraft by the Washington State Department of Transportation", , 1 June 2008 (2008-06-01), XP055233554, Retrieved from the Internet: URL:http://www.wsdot.wa.gov/research/repor ts/fullreports/703.1.pdf [retrieved on 2015-12-03]

## Description

As is known, it is sometimes necessary, for safety reasons, to artificially induce the detachment of avalanches, so that the masses of snow will take a more stable conformation and will not endanger people and/or property because of massive and unexpected natural detachment.

FR 2 964 732 A1, which is considered to be the closest prior art and discloses all the features of the preamble of claim 1, discloses a projectile for avalanche triggering intended to be dropped vertically above a terrestrial target from a dropping point of an aerial station. The projectile for avalanche triggering is formed of an envelope containing an explosive charge and is furnished with a pyrotechnic primer. The projectile for avalanche triggering comprises a telemeter connected to a control module for commanding the firing of the pyrotechnic primer and arranged on a lower part of the envelope in such a way as to be oriented facing the terrestrial target in the dropping and/or detection position. The control module is parameterized in such a way as to trigger the ignition of the explosive charge at a predetermined distance from the terrestrial target detected by the telemeter.

Within this technical frame, it is one object of the present invention to provide an apparatus and a system useful for inducing artificial avalanche detachment also on slopes and ravines that cannot be reached by helicopters piloted by skilled operators and/or from fixed stations.

It is another object of the invention to provide an apparatus and a system that allow triggering the charge in a simple, safe and economical manner.

It is another object of the present invention to provide an apparatus and a system that can induce artificial avalanche detachment with a low environmental impact in terms of pollution. It is another object of the present invention to provide an apparatus and a system that can induce artificial avalanche detachment even in the absence of visibility for human operators. It is another object of the invention to provide an apparatus and a system that allow inducing artificial avalanche detachment in a timely, economical and safe manner.

These and other objects are substantially achieved through a remotely piloted aircraft or drone adapted to induce artificial avalanche detachment and through a system adapted to induce artificial avalanche detachment, as set out in the appended claims.

Further features and advantages will become more apparent in the light of the following description of some preferred and non-limiting embodiments of the invention. This description will refer to the annexed drawings, also provided merely as explanatory and non-limiting examples, wherein:
- Figure 1 shows a block diagram of an aircraft in accordance with the present invention;
- Figure 2 shows a block diagram of a system into which the aircraft of Figure 1 can be included.

With reference to the annexed drawings, reference numeral 1 designates as a whole a remotely piloted aircraft in accordance with the present invention. Reference numeral 200 designates as a whole a system that may include the aircraft 1.

For simplicity, hereafter the expression "remotely piloted aircraft" will be abbreviated as RPA.

The RPA 1 comprises, first of all, operating members 10 adapted to bring and/or keep the RPA 1 itself in a flight condition. The operating members 10 *are per se* known and will not therefore be described any further.

Merely by way of example, the operating members 10 may comprise six motors, each one having a power output of approx. 500 W.

The operating members 10 may also comprise power supply units, e.g. lithium polymer batteries having a power output of 20,000 mah, thus giving the RPA 1 a full-load range of approx. 20 minutes.

The chassis structure of the RPA 1, e.g. made of carbon fiber, is such that it allows the aircraft to take off, cover predefined distances and, whenever necessary, remain suspended in flight in a given position (hovering).

In order to induce artificial avalanche detachment, the RPA 1 is associated with a charge 30. The charge 30 is an explosive charge. The charge 30 preferably comprises a deflagrating device.

This means that, when triggered, the charge 30 will cause an explosion characterized by subsonic advance of the explosion front within the charge.

The Applicant wishes to point out that the behaviour of a deflagrating device differs from that of a detonating charge, which, when triggered, causes an explosion characterized by a supersonic advance of the explosion front within the charge.

The Applicant also wishes to point out that traditional explosives generate a very short and strong pressure peak, the propagation of which is very limited in terms of distance; on the contrary, deflagrating materials cause explosions wherein the front travels at subsonic speed and creates less sudden overpressures, while also producing a shock wave and a retrograde wave that are much deeper and longer, which can act more deeply upon the bonds of the snow crystals, thus exerting a broader and deeper scaling action.

For example, the deflagrating device may comprise a mixture including:
- potassium perchlorate in a weight percentage between 60% and 80%;
- aluminium in a weight percentage between 40% and 20%.

In particular, the aluminium is powder aluminium, preferably of the so-called "dark pyro" type.

The Applicant believes that significant advantages can be attained through the use of pyrotechnic material as opposed to detonating material, both in terms of safety and in terms of compliance with the regulations currently in force in this field, e.g. those concerning storage requirements. In fact, the legal requirements for storage of pyrotechnic materials are less restrictive than those for storage of detonating materials; thus, a charge 30 will more easily and quickly available than a charge of detonating material.

Advantageously, the charge 30 comprises an NFC tag, whereon at least one identification code of the charge 30 itself has been stored. For the explosion to be triggered, the NFC tag must have been detected and recognized by the RPA 1.

The RPA 1 comprises a cable 20 for connecting the RPA 1 to the charge 30 and for holding the charge 30 suspended outside the RPA 1.

More in detail, the cable 20 is initially wound around a suitable support 31. The free end of the cable 20, i.e. that end which is not secured to the RPA 1, in particular to said support, is attached to the charge 30. When in use, the RPA 1 is near the area where the avalanche needs to be detached; the cable 20 is then unwound, so that the charge will move away from the chassis of the RPA 1 and remain suspended under the RPA 1.

For this purpose, the RPA 1 is equipped with an unwinding device 100 adapted to unwind the cable 20 from the wound condition to the (at least partially) unwound condition, in which it holds the charge 30 suspended outside the RPA 1.

Thanks to the cable 20 and to the unwinding device 100, the RPA 1 can reach the area to be reclaimed (i.e. the area where an explosion needs to be induced) without any charge suspended or oscillating under the structure of the RPA 1 itself, so that it can fly towards the target area in an easier and safer way.

In addition to the structural function, the cable 20 preferably also performs the task of conducting the current necessary for activating the charge 30.

The charge 30 is triggered by an electric current that, by flowing through a resistor included in the charge 30 and developing heat through the Joule effect, causes the explosion of the material, preferably a deflagrating material, included in the charge 30 itself.

In order to trigger the charge 30, the APR 1 comprises a triggering device 40 configured for causing the electric current I to flow along the cable 20, so that said current I will reach the charge 30 and cause it to explode.

In other words, the cable 20 allows establishing a galvanic connection between the triggering device 40 aboard the RPA 1 and the charge 30, which requires the above-mentioned current I in order to be triggered.

Preferably, the current I is substantially greater than 2 A; this avoids that smaller currents, e.g. generated by electrostatic effects, might accidentally trigger the charge.

In a different embodiment, the triggering device 40 may be mounted locally on the charge 30 itself. The triggering device 40 may comprise, for example, a battery, a switch (e.g. a relay) and a radio module. According to a first option, the triggering command may be sent via radio from the APR 1 to the triggering device 40 upon reception of a signal from a remote control apparatus in use by an operator. According to another option, the triggering signal is transmitted remotely, still via radio, directly by the remote control apparatus. After the triggering signal has been received, the switch is switched in order to allow triggering the explosive material included in the charge 30, preferably by means of an electric current supplied by the above-mentioned battery. Note that the remote control apparatus mentioned with reference to this embodiment may coincide, for example, with the second control device REM2, which will be described below.

Preferably, the RPA 1 comprises a reception section RX for receiving positioning/handling commands C1 and/or commands C2 for triggering the explosion of the charge 30.

Preferably, there are a first reception module RX1 for receiving the commands C1 and a second reception module RX2 for receiving the command C2.

Advantageously, the two reception modules RX1, RX2 are physically separated, so as to ensure a high degree of safety.

Furthermore, in one embodiment the second reception module RX2 operates on a frequency band which is different and distant from the frequency of the first reception module RX1. For example, communications involving the second reception module RX2 may use the so-called FHSS (Frequency Hopping Spread Spectrum) technique, wherein pseudo-random frequency variations are made in order to substantially avoid any interference or interception during the transmission of the command.

The commands C1 can be sent from a first control device REM1, through which a first operator (called "flight director") can control the movements in flight of the RPA 1.

For example, the navigation system of the RPA 1, managed via communication with the first control device REM1, may be based on DJI and Data-Link technology.

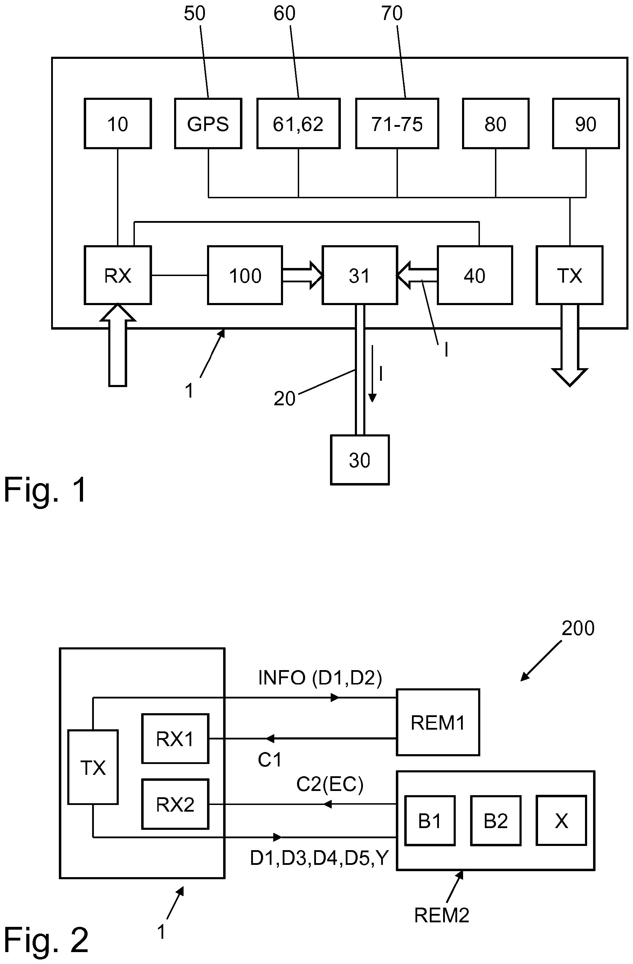

Advantageously, the unwinding device 100 is controlled by the first control device REM1. The data exchanged between the first control device REM1 and the RPA 1 are designated as a whole as "INFO" in Figure 2.

Preferably, the commands C2 are sent from a second control device REM2, through which a second operator (called "fire director") can command the explosion of the charge 30 via an appropriate explosion command EC.

Preferably, the second control device REM2 comprises:
- a triggering switch X;
- two separate physical push-buttons B1, B2.

Following the activation of the switch X, the explosion command EC is generated if, while one of said push-buttons B1, B2 is being pressed, the other push-button B2, B1 is pressed as well.

In particular, the second control device REM2 is configured for generating the explosion command EC if both push-buttons B1, B2 are held pressed simultaneously for a predefined time interval.

The reason for this is to avoid accidental and/or undesired triggering.

The fact that handling and triggering are controlled by two different persons ensures a high degree of safety and reliability of the operation being carried out.

In practical terms, the first and second control devices REM1, REM2 can be implemented as two distinct remote controls, each one used by a different operator.

Preferably, the RPA 1 comprises a positioning module 50, in particular of the Global Positioning System (GPS) type. The positioning module 50 is configured for determining the position of the RPA 1 at least while the latter is flying. In one embodiment, the positioning module 50 can lock onto three or more satellites in order to determine the position of the RPA 1.

In one embodiment, the positioning module 50 comprises two distinct and independent antennas for more reliable detections. Preferably, the position detected by the first antenna is sent to the first control device REM1, whereas the position detected by the second antenna is sent to the second control device REM2. The flight director and the fire director can then verify the coherence of the received data.

The RPA 1, the first control device REM1 and the second control device REM2 make up a system 200 suitable for inducing artificial avalanche detachment.

Preferably, the RPA 1 comprises one or more video cameras 60 adapted to shoot the surrounding environment.

Preferably, there may be a first video camera 61 and a second video camera 62.

Preferably, the first video camera 61 is aimed at the horizon (or in a nearby direction, since the orientation of the acquisition direction is controllable) to allow visual flight aid during the operation.

Preferably, the second video camera 62 shoots vertically downwards to follow the unwinding of the cable 20 and to record the scaling operation. In this manner, there will be records of the operation, which can then be viewed for making verifications or comparisons between completed reclamations.

Preferably, the RPA 1 comprises one or more sensors 70, preferably of the ultrasonic type, adapted to detect the presence of foreign bodies in the surrounding environment.

In one embodiment, five ultrasonic sensors 71-75 are used, respectively dedicated to detections in the following directions:
- North
- South
- East
- West
- Towards the ground.

Preferably, the RPA 1 comprises a measurement module 80, in particular of the laser type, for measuring the flight and/or hovering altitude of the RPA 1. In other words, the measurement module 80 can return, substantially in real time, the altitude at which the RPA 1 is. Preferably, the RPA 1 comprises a radio transmission module TX for transmitting one or more of the following data:
- data D1 representative of the position detected by the positioning module 50;
- data D2 representative of one or more images detected by said one or more video cameras 60;
- data D3 representative of the detections carried out by said one or more sensors 70;
- data D4 representative of one or more measurements made by said measurement module 80. Preferably, the data D1 (supplied by the first antenna of the positioning module 50) and D2 are sent to the first control device REM1.

Preferably, the data D1 (supplied by the second antenna of the positioning module 50), the data D3 and the data D4 are sent to the second control device REM2, so as to provide the fire director with all the necessary information prior to triggering the explosion.

Preferably, at given time instants (e.g. with periodic frequency), the transmission module TX sends to the second control device REM2 an active transmission signal D5 that allows the second control device REM2 to know that the transmission apparatus of the RPA 1 is working properly and there is no noise on the channel.

Preferably, the RPA 1 comprises a recognition module 90, e.g. of the Near Field Communication (NFC) type, for recognizing the charge 30 and permitting the activation of the explosion thereof.

In particular, the recognition module 90 may comprise an NFC reader, a memory, and a comparison module: the memory stores identification codes of suitable charges; the comparison module verifies that the identifier of the charge 30 is included in the stored list. If not, the explosion will be inhibited and the mission will be cancelled.

Preferably, through the radio transmission module TX, the RPA will send to the second control device REM2 a fully unwound cable signal Y when the cable 20 is completely unwound. Thus, the fire director will be certain that the charge 30 will be at a predefined distance (e.g. 20 metres, equal to the length of the cable 20) from the RPA 1.

For example, the signal Y may be generated when an optical sensor (e.g. an optical proximity sensor), associated with the unwinding device 100, detects the presence of a reflecting element at the end of the cable 20 that is not secured to the charge 30, which is only visible when the cable 20 has been completely unwound.

Preferably, the RPA 1, the first control device REM1 and the second control device REM2 are equipped with respective microprocessors, suitably configured for executing and/or managing the above-described operations.

From an operational viewpoint, the following must be pointed out.

After the initial system checks and setup, the RPA 1 is commanded to make a reconnaissance flight over the area to be reclaimed, so as to store the trajectory that the RPA will have to follow while carrying out the artificial avalanche detachment operation.

Once the RPA 1 has returned to the base, it is verified that there is no substantial potential difference across the wires of the unwinding device 100. This test is useful to avoid that, due to faults or malfunctions, current might be supplied by any means to the charge 30, resulting in uncontrolled explosion.

At this point, the charge 30 can be mechanically and galvanically connected to the cable 20.

The RPA 1 can then take off again to reach the place where the explosion will have to occur. After reaching the target position, with the RPA in the hovering condition, the unwinding device 100 is activated in order to unwind the cable 20 and suspend the charge 30 under the RPA 1.

Note that the operations described so far, which are carried out after the restart of the RPA 1, are managed by the flight director by means of the first control device REM1.

The fire director now can, through the second control device REM2, trigger the charge 30 and cause the explosion. More in detail, the second control device REM2 sends the explosion command EC to the RPA 1, so that the current I can flow along the cable 20, reach the charge 30, and cause the deflagration.

Note that the explosion can only be triggered if all checks are passed:
- The position of the RPA 1, described in terms of GPS coordinates, must match a target position loaded beforehand into the system;
- There must be no unexpected objects/entities around the RPA 1 and the charge 30 (this verification is made through the sensors 70);
- The charge 30 must have been recognized by the recognition module 90;
- The distance measured by the module 80 must be within predefined tolerances;
- The cable 20 must have been completely unwound;
- The signal D5 must have been correctly received, as a confirmation of the proper operation of the transmission apparatus of the RPA 1 and of the absence of noise;
- The switch X must have been operated;
- The first and second push-buttons B1, B2 must be pressed simultaneously for a sufficiently long time.

This will ensure that the explosion will only occur in appropriate conditions, so that the predefined target can be reached without any collateral damage.

Advantageously, the check for the existence of the predefined conditions is carried out by the on-board electronics of the RPA 1. Preferably, the RPA 1 is equipped with a series of switches, e.g. relays, each one of which will be switched when a corresponding condition included in the above list is verified. When all switches have been properly switched, it will then be possible to trigger the charge 30, e.g. by causing the triggering device 40 to let the current I flow along the cable 20.

## Claims

1. Remotely piloted aircraft (1), in particular drone, adapted to induce artificial avalanche detachment, comprising:
- operating members (10) adapted to bring and/or keep said aircraft (1) in a flight condition;
- a cable (20) for connecting said aircraft (1) to an explosive charge (30) and for holding said charge (30) suspended outside said aircraft (1);
- a triggering device (40) configured for causing the explosion of said charge (30) **characterised in that** said triggering device (40) is configured for causing an electric current (I) to flow along said cable in order to trigger said charge (30).

2. Aircraft according to claim 1, further comprising a radio reception section (RX) for receiving positioning/handling commands (C1) and/or commands (C2) for triggering the explosion of said charge (30).

3. Aircraft according to any one of the preceding claims, further comprising a positioning module (50), preferably of the Global Positioning System type, for determining the position of said aircraft (1) at least while the latter is flying.

4. Aircraft according to any one of the preceding claims, further comprising one or more video cameras (60) adapted to shoot the environment around said aircraft (1).

5. Aircraft according to any one of the preceding claims, comprising one or more sensors (70), preferably of the ultrasonic type, adapted to detect the presence of foreign bodies in the environment around said aircraft (1).

6. Aircraft according to any one of the preceding claims, further comprising a measurement module (80), preferably of the laser type, for measuring a flight altitude and/or a hovering altitude of said aircraft (1).

7. Aircraft according to any one of the preceding claims, further comprising an unwinding device (100) adapted to unwind said cable (20) from a wound condition to an at least partially unwound condition, in which it holds said charge (30) suspended outside said aircraft (1).

8. Aircraft according to any one of claims 3 to 7, further comprising a radio transmission module (TX) for transmitting one or more of the following data:
- data (D1) representative of the position detected by said positioning module (50);
- data (D2) representative of one or more images detected by said one or more video cameras (60);
- data (D3) representative of the detections carried out by said one or more sensors (70);
- data (D4) representative of one or more measurements made by said measurement module (80);
- data (D5) representative of an active transmission of said aircraft (1);
- a signal (Y) representative of a complete unwinding of said cable (20) by said unwinding device (100).

9. Aircraft according to any one of the preceding claims, further comprising a recognition module (90), preferably of the Near Field Communication type, for recognizing said charge (30) and permitting the explosion of said charge (30).

10. Aircraft according to any one of the preceding claims, wherein said charge (30) comprises a deflagrating device.

11. System for inducing artificial avalanche detachment, comprising:
- an aircraft (1) according to any one of the preceding claims;
- a first control device (REM1) adapted to communicate via radio with said aircraft (1), exchanging information (INFO) about the position and/or motion of said aircraft (1);
- a second control device (REM2) adapted to communicate via radio with said aircraft (1) for sending at least one explosion command (EC) in order to cause the explosion of said charge (30).

12. System according to claim 11, wherein said second control device (REM2) comprises at least two separate push-buttons (B1, B2), said explosion command (EC) being generated if, while one of said push-buttons (B1, B2) is pressed, the other one (B2, B1) is pressed as well, wherein said second control device (REM2) is preferably configured for generating said explosion command (EC) if said push-buttons (B1, B2) are held pressed simultaneously for a predefined time interval.

## Patentansprüche

1. Ferngesteuertes Fluggerät (1), insbesondere Drohne, die eingerichtet ist, eine künstliche Lawinenablösung auszulösen,
umfassend:
- Betriebsteile (10), die eingerichtet sind, das Fluggerät (1) in einen Flugzustand zu bringen und/oder zu halten;
- ein Kabel (20) zum Verbinden des Fluggeräts (1) mit einer Sprengladung (30) und zum Halten der Ladung (30) außerhalb des Fluggeräts (1);
- eine Auslösevorrichtung (40), die ausgebildet ist, eine Sprengung der Ladung (30) zu verursachen
**dadurch gekennzeichnet, dass**
die Auslösevorrichtung (40) ausgebildet ist, einen elektrischen Strom (I) dazu zu bringen, entlang dem Kabel zu fließen, um die Ladung (30) auszulösen.

2. Fluggerät nach Anspruch 1, das ferner eine Funkempfangssektion (RX) zum Empfangen von Positionier-/Handhabungsbefehlen (C1) und/oder Befehlen (C2) zum Auslösen der Sprengung der Ladung (30) umfasst.

3. Fluggerät nach einem der vorhergehenden Ansprüche, das ferner ein Positionierungsmodul (50), vorzugsweise vom Typ globales Positionsbestimmungssystem, zum Bestimmen der Position des Fluggeräts (1) zumindest während des Flugs umfasst.

4. Fluggerät nach einem der vorhergehenden Ansprüche, das ferner ein oder mehrere Videokameras (60) umfasst, die eingerichtet sind, die Umgebung um das Fluggerät (1) aufzunehmen.

5. Fluggerät nach einem der vorhergehenden Ansprüche, das ein oder mehrere Sensoren (70), vorzugsweise vom Typ Ultraschall, umfasst, die eingerichtet sind, das Vorhandensein von Fremdkörpern in der Umgebung um das Fluggerät (1) zu erfassen.

6. Fluggerät nach einem der vorhergehenden Ansprüche, das ferner ein Messmodul (80), vorzugsweise vom Typ Laser, umfasst, um eine Flughöhe und/oder eine Schwebehöhe des Fluggeräts (1) zu messen.

7. Fluggerät nach einem der vorhergehenden Ansprüche, das ferner eine Abwickelvorrichtung (100) umfasst, die eingerichtet ist, das Kabel (20) von einem gewickelten Zustand in einen zumindest teilweise abgewickelten Zustand abzuwickeln, in dem es die Ladung (30) außerhalb des Fluggeräts (1) hält.

8. Fluggerät nach einem der Ansprüche 3 bis 7, das ferner ein Funkübertragungsmodul (TX) zum Übertragen einer oder mehrerer der folgenden Daten umfasst:
- Daten (D1), die für die von dem Positionierungsmodul (50) erfasste Position repräsentativ sind;
- Daten (D2), die für ein oder mehrere Bilder, die mit der einen oder den mehreren Videokameras (60) erfasst wurden, repräsentativ sind;
- Daten (D3), die für die von dem einen oder den mehreren Sensoren (70) durchgeführten Detektionen repräsentativ sind;
- Daten (D4), die für ein oder mehrere Messungen, die durch das Messmodul (80) gemacht wurden, repräsentativ sind;
- Daten (D5), die für eine aktive Übertragung des Fluggeräts (1) repräsentativ sind;
- ein Signal (Y), das für ein komplettes Abwickeln des Kabels (20) durch die Abwickelvorrichtung (100) repräsentativ ist.

9. Fluggerät nach einem der vorhergehenden Ansprüche, das ferner ein Erkennungsmodul (90) umfasst, vorzugsweise vom Typ Nahfeldkommunikation, zum Erkennen der Ladung (30) und Ermöglichen der Sprengung der Ladung (30).

10. Fluggerät nach einem der vorhergehenden Ansprüche, wobei die Ladung (30) eine Verpuffungsvorrichtung umfasst.

11. System zur Einleitung einer künstlichen Lawinenablösung, umfassend:
- ein Fluggerät (1) nach einem der vorhergehenden Ansprüche;
- eine erste Steuervorrichtung (REM1), die eingerichtet ist, über Funk mit dem Fluggerät (1) zu kommunizieren, um Informationen (INFO) über die Position und/oder Bewegung des Fluggeräts (1) auszutauschen;
- eine zweite Steuervorrichtung (REM2), die eingerichtet ist, über Funk mit dem Fluggerät (1) zu kommunizieren, um zumindest ein Sprengkommando (EC) zu senden, um die Sprengung der Ladung (30) zu verursachen.

12. System nach Anspruch 11, wobei die zweite Steuervorrichtung (REM2) zumindest zwei separate Druckknöpfe (B1, B2) umfasst, das Sprengkommando (EC) erzeugt wird, wenn während einer der Druckknöpfe (B1, B2) gedrückt ist, der andere (B2, B1) auch gedrückt wird, wobei die zweite Steuervorrichtung (REM2) vorzugsweise ausgebildet ist, um das Sprengkommando (EC) zu erzeugen, wenn die Druckknöpfe (B1, B2) gleichzeitig für eine vorbestimmte Zeitdauer gedrückt gehalten werden.

## Revendications

1. Aéronef télépiloté (1), en particulier drone, adapté pour entraîner un décollement d'avalanche artificiel, comprenant :
- des organes de fonctionnement (10) adaptés pour amener et/ou garder ledit aéronef (1) dans une condition de vol ;
- un câble (20) pour raccorder ledit aéronef (1) à une charge explosive (30) et pour maintenir ladite charge (30) suspendue à l'extérieur dudit aéronef (1) ;
- un dispositif de déclenchement (40) configuré pour provoquer l'explosion de ladite charge (30)
**caractérisé en ce que**
ledit dispositif de déclenchement (40) est configuré pour provoquer la circulation d'un courant électrique (I) le long dudit câble afin de déclencher ladite charge (30).

2. Aéronef selon la revendication 1, comprenant en outre une section de réception radio (RX) pour recevoir des ordres de positionnement/manipulation (C1) et/ou des ordres (C2) pour déclencher l'explosion de ladite charge (30).

3. Aéronef selon l'une quelconque des revendications précédentes, comprenant en outre un module de positionnement (50), de préférence du type système mondial de positionnement, pour déterminer la position dudit aéronef (1) au moins tandis que ce dernier vole.

4. Aéronef selon l'une quelconque des revendications précédentes, comprenant en outre une ou plusieurs caméras vidéo (60) adaptées pour filmer l'environnement autour dudit aéronef (1).

5. Aéronef selon l'une quelconque des revendications précédentes, comprenant un ou plusieurs capteurs (70), de préférence du type ultrasonique, adaptés pour détecter la présence de corps étrangers dans l'environnement autour dudit aéronef (1).

6. Aéronef selon l'une quelconque des revendications précédentes, comprenant en outre un module de mesure (80), de préférence du type laser, pour mesurer une altitude de vol et/ou une altitude stationnaire dudit aéronef (1).

7. Aéronef selon l'une quelconque des revendications précédentes, comprenant en outre un dispositif de déroulement (100) adapté pour dérouler ledit câble (20) depuis une condition enroulée à une condition au moins partiellement déroulée, dans laquelle il maintient ladite charge (30) suspendue à l'extérieur dudit aéronef (1).

8. Aéronef selon l'une quelconque des revendications 3 à 7, comprenant en outre un module de transmission radio (TX) pour transmettre une ou plusieurs des données suivantes :
- des données (D1) représentatives de la position détectée par ledit module de positionnement (50) ;
- des données (D2) représentatives d'une ou plusieurs images détectées par lesdites une ou plusieurs caméras vidéo (60) ;
- des données (D3) représentatives des détections réalisées par lesdits un ou plusieurs capteurs (70) ;
- des données (D4) représentatives d'une ou plusieurs mesures faites par ledit module de mesure (80) ;
- des données (D5) représentatives d'une transmission active dudit aéronef (1) ;
- un signal (Y) représentatif d'un déroulement complet dudit câble (20) par ledit dispositif de déroulement (100).

9. Aéronef selon l'une quelconque des revendications précédentes, comprenant en outre un module de reconnaissance (90), de préférence du type à communication en champ proche, pour reconnaître ladite charge (30) et permettre l'explosion de ladite charge (30).

10. Aéronef selon l'une quelconque des revendications précédentes, dans lequel ladite charge (30) comprend un dispositif de déflagration.

11. Système d'entraînement de décollement d'avalanche artificiel, comprenant :
- un aéronef (1) selon l'une quelconque des revendications précédentes ;
- un premier dispositif de commande (REM1) adapté pour communiquer par radio avec ledit aéronef (1), en échangeant des informations (INFO) concernant la position et/ou le mouvement dudit aéronef (1) ;
- un second dispositif de commande (REM2) adapté pour communiquer par radio avec ledit aéronef (1), pour envoyer au moins un ordre d'explosion (EC) afin de provoquer l'explosion de ladite charge (30).

12. Système selon la revendication 11, dans lequel ledit second dispositif de commande (REM2) comprend au moins deux boutons poussoirs (B1, B2) séparés, ledit ordre d'explosion (EC) étant généré si, tandis que l'un desdits boutons poussoirs (B1, B2) est enfoncé, l'autre (B2, B1) est également enfoncé, dans lequel ledit second dispositif de commande (REM2) est de préférence configuré pour générer ledit ordre d'explosion (EC) si lesdits boutons poussoirs (B1, B2) sont maintenus enfoncés simultanément pendant un intervalle de temps prédéfini.
